(19) Europäisches Patentamt

European Patent Office

Office européen des brevets

(11) **EP 1 498 402 B1**

(12) **EUROPEAN PATENT SPECIFICATION**

(45) Date of publication and mention
of the grant of the patent:
**02.11.2005 Bulletin 2005/44**

(51) Int Cl.⁷: **C04B 41/88**

(21) Application number: **02702416.5**

(86) International application number:
**PCT/ES2002/000079**

(22) Date of filing: **22.02.2002**

(87) International publication number:
**WO 2003/070663 (28.08.2003 Gazette 2003/35)**

(54) **METHOD OF PRODUCING CERAMIC TILES HAVING A METALLIC FINISH AND THE TILE THUS PRODUCED**

VERFAHREN ZUR HERSTELLUNG VON KERAMIKFLIESEN MIT METALLISCHEM FINISH UND SO HERGESTELLTE FLIESE

PROCEDE D'OBTENTION DE DALLES EN CERAMIQUE ET DALLE AINSI OBTENUE

(84) Designated Contracting States:
**DE IT PT TR**

(43) Date of publication of application:
**19.01.2005 Bulletin 2005/03**

(73) Proprietors:
• **Fundaci N Tekniker**
  **20600 Eibar (ES)**
• **FRITTA, S.L.**
  **12200 Onda (Castellon) (ES)**

(72) Inventors:
• **ALBERDI AGUIRREBENA, Alberto**
  **E-20600 EIBAR (ES)**
• **FRANCH PERSONAL, Manuel**
  **E-12200 Onda (Castellon) (ES)**

• **BELDA PENA, Adriana**
  **E-46530 PUZOL (ES)**
• **LUCAS MART N, Fernando**
  **E-12005 CASTELL N (ES)**
• **LAUCIRCA ARAMBURO, Javier**
  **20600 Eibar (Guipuzcoa) (ES)**
• **BUENO ZULOAGA, Ramon Maria**
  **20600 Eibar (Guipuzcoa) (ES)**

(74) Representative: **Carpintero Lopez, Francisco**
**HERRERO & ASOCIADOS, S.L.**
**Alcalá, 35**
**28014 Madrid (ES)**

(56) References cited:
**ES-A- 2 162 566     ES-T3- 2 153 708**
**ES-T3- 2 162 021     FR-A- 2 426 032**

## Description

## OBJECT OF THE INVENTION

The present invention refers to a method that enables a coating, consisting of a layer of metal, such as chromium, zirconium, tantalum or titanium or of an electrically conductive compound, such as the nitride or carbonitride of the afore-mentioned metals, to be deposited on baked and even enamelled ceramic tiles, conferring the tile a metallic appearance as well as a protective layer that enhances its properties.

The metallic layer is deposited directly onto the outer layer of the ceramic tile, using for this purpose an electric arc evaporator that provides good adherence between the metal coating and the ceramic, without any need to use intermediate layers acting as a binder or subjecting the tile to subsequent firing heat treatments.

The object of the invention also includes the manufacture of ceramic tiles coated by means of the aforesaid process, which, besides a metallic look, present enhanced characteristics in terms of lustre, electrical conductivity, scratching resistance, resistance to attack by acid or alkaline substances and other corrosive agents, so that they prove especially suitable as a facade covering.

Furthermore, a fine film of water-repellent material may be applied to the metallic coating, either by means of conventional methods (immersion or centrifuging), or else by vacuum deposition of the thermally heated material or sputtering techniques.

## PRIOR ART

In their different types of porous flooring or cladding ceramic tiles are usually made by firing a ceramic backing, which is coated with a consolidated layer of frits and crystalline materials that glaze after the baking process. The ceramic backing may be raw, as when the single-fire method is used, or else baked, when the double-fire method is used.

Obviously, ceramic glazed products must have technical and decorative qualities that make them suitable for the use to which they are to be put, such as for example:

- Insolubility in water and in those acids and bases with which they may enter into contact in normal use.
- Scratching resistance, hardness.
- Imperviousness.
- Resistance to cracking, flaking, impact, etc.
- Resistance to wear.
- Versatility for producing decorative effects.
- Fusibility between predetermined temperature limits.

Specifically, these characteristics differ in accordance with the ceramic product in question: floor tiles, wall tiles, decorative articles, etc. In addition, depending on the finish process used, they may present different surface appearances: gloss or matt, opaque or transparent, smooth or granulated, polished or unpolished.

Current ceramic metallizing techniques normally consist of adding a given amount of metal to the baked tiles, but prior to glazing or final enamelling, so their finishes have very low scuff and scratching resistance, being impossible to use on floors or facades, and they are not resistant to chemical attack. Furthermore, the gloss of current finishes does not exceed 200 ‰ (a value measured with a gloss meter with an angle of incidence of 60°).

Amongst the procedures used today for the metallic coating of ceramic tiles, we may mention the following:

- Added fire methods using salts of precious metals applied by means of screen process techniques on baked ceramic tiles with subsequent firing of the tile at temperatures below the melting point of the metal. This procedure produces metallic finishes with very little chemical resistance and low hardness, while what is more the articles have a very high cost due mainly to the price of precious metals and the cost of the additional baking of the ceramic tiles.

- Use of iron aventurine enamels. This type of enamel has a high metallic oxide (iron and/or copper) and phosphate (mainly aluminium) content in its composition, and baking produces hematite crystallizations, which display a metallic lustre. The crystallization process is very hard to control, the variability interval in the chemical composition is very narrow and the technical properties of the coatings are not very good (they do not withstand the chemical attack of concentrated acid) and the hardness is low, between 130 and 200 kgf/mm$^2$.

Application PCT WO 01/72651 is also well known, where a formula is proposed that comprises a mixture of metallic oxides applied to the ceramic tile after firing and before glazing, whereupon the baking is done according to traditional techniques. This formulation enables metallic effects to be obtained on the tiles, but it presents the same problems mentioned above, relating to the poor gloss of the covering. In addition, the outer glazing of the tile is subject to the usual problems with regard to its lack of resistance to wear and attack by chemical agents.

Another restrictive aspect of current ceramic tiles is that they are electrical insulators, which may create problems of static electricity, unacceptable in certain applications, such as in the lining of operating theatres for instance.

Furthermore, techniques of vacuum deposition of a material evaporated by physical methods (called PVD technology) has been well known and in use for some time now, and in its different variants of thermal evaporation, electron beam evaporation, sputtering, cathode arc evaporation or laser ablation this technology enables a wide range of pure and composite materials to be applied in the form of a coating. Although the possibilities are almost infinite, the materials most commonly applied by PVD techniques as protective and decorative coatings are pure metals, such as aluminium, titanium, zirconium, tantalum or chromium, and compounds consisting of nitrides, carbonitrides or oxides of these metals. PVD techniques are used mainly in the optics and microelectronics industry.

These PVD techniques are also successfully used in industry for the application of protective coatings against wear in cutting tools, medical instruments, deformation forming jigs, aluminium or plastic injection moulds, and a wide range of mechanical elements. In addition, taking advantage of the attractive gold or silver colour of some of these materials, this technology is used to apply decorative and corrosion-preventive coatings to an ever-widening range of products for daily use, such as pieces of cutlery, articles of precious and fashion jewellery, bathroom accessories, metalwork fixtures, furniture fittings and other decorative elements.

Barring a few exceptions, the decorative, corrosion-inhibiting or wear-resistant coatings mentioned in the previous paragraph are applied to metallic substrates: mainly steels in the case of tools, mechanical elements and moulds, and bronze or zamak previously coated electrolytically with nickel or chromium, in the case of decorative applications, since, when the intention is to apply them to ceramic or glass materials, there is a major problem of adhesion, which in the end makes their use inadvisable for the coating of these materials.

Therefore, intermediate layers are usually used, which enable the outer metallic substrate to bind and adhere to the ceramic, but this involves a complication which makes the coating method more expensive.

In this respect, we may mention European patent n° 0 459 865, German patent n° 19900182, United States patent n° 5422188 or Japanese patent n° 3005387.

As far as the decorative characteristics of ceramic tiles are concerned, there is a growing market demand today for metallic finishes, for instance gold or silver.

## DESCRIPTION OF THE INVENTION

The method that is the object of the invention enables tiles to be produced having a metallic look, by means of the application of a metallic coating directly to the already fired and even enamelled ceramic tile, a coating which is composed of chromium, zirconium, tantalum, titanium or a nitride or carbonitride of these elements, thereby enhancing its properties of lustre and resistance to scratching and abrasion by chemical agents.

For this purpose a specially adapted PVD procedure is used which makes it possible to secure good adhesion of the coating to the ceramic substrate, without the need to apply intermediate layers, so the tiles produced are of special application to industrial buildings or facade coverings.

To be specific, a cathode arc evaporator is used for the vaporization of the filler material in the coating, the procedure being performed in a vacuum chamber equipped with resistances or other heating elements that enable the temperature of the pieces to be raised within the 150-500°C range, using as the cathode a plate of the metal that is to be deposited, such as for instance zirconium, chromium, tantalum or titanium, either as a pure element or else constituting a nitride or carbonitride type compound.

The cathode arc evaporation coating procedure basically consists of three stages:

- vacuum heating of the pieces to be coated
- surface activation of the pieces to be coated
- growth of the protective layer

The vacuum heating of the tiles to be coated should be done before switching on the evaporators so as to eliminate any moisture or other contaminating gases that may be absorbed by the ceramic.

The second stage of the process, activation of the surfaces to be coated, is done with the evaporators switched on and in the presence of an inert gas, normally argon.

In the metallic piece cathode arc coating processes used today, the surface activation stage is carried out by applying a negative potential difference in relation to the body of the vacuum chamber to the parts to be coated, so that the ions of the evaporated material accelerate and reach the surface of the pieces with high kinetic energy, thereby assisting the nucleation of the layer.

In the case of ceramic tiles, it is not possible to use this procedure due to their being electrical insulators. Therefore, according to the method covered by the invention, for the surface activation of the pieces to be coated, the actual kinetic energy with which the particles of the evaporated material leave the surface of the cathode is utilized. So that the surface activation may be effective and assure proper adhesion of the coating to the piece, the working pressure must be limited in accordance with the distance of the pieces from the evaporator.

The third stage - protection layer growth - does not differ substantially from the already known processes which are applied to metallic pieces. Depending on the nature of the compound that we want to be deposited, an argon atmosphere is generated in the vacuum chamber to produce layers of pure metals, a mixture of argon with nitrogen to deposit nitrides of the metal evaporated, or mixtures of argon, nitrogen and a hydrocarbon, for example, acetylene or methane, when the compound to be deposited is a carbonitride of the metal evaporated.

At the termination of the process it is possible to induce oxidization of a fine surface film of the coating. These films are transparent and produce optical interference effects between the incident light rays that reflect on the surface of the oxidized film and those that pass through it and reflect on the surface of the metallic coating not affected by surface oxidation. In this way, a wide range of colours is obtained on the ceramic tiles, with decorative features impossible to achieve by other methods.

The tile produced by this method offers a decorative protective coating composed of a metal selected from among the group composed of chromium, zirconium, tantalum or titanium or else by a nitride or carbonitride of these elements, presenting a gloss above 300‰, resistance GHA to attack by acids, bases and cleaning agents, and a surface hardness above 1500 kgf/mm$^2$, having different metallic colours, depending on the material of which the coating layer is composed.

## DESCRIPTION OF THE DRAWINGS

To supplement the description being given and in order to assist better understanding of the features of the invention, this description is accompanied, as an integral part hereof, by a set of drawings wherein, for purely illustrative and non-restrictive purposes, the following is represented:

Figure 1.- It shows a cross-sectional diagrammatic representation of a typical rectangular arc evaporator.

Figure 2.- It shows a diagrammatic representation of the different layers that make up the protective coating of the ceramic tiles that are the object of the present invention.

## PREFERRED EMBODIMENT OF THE INVENTION

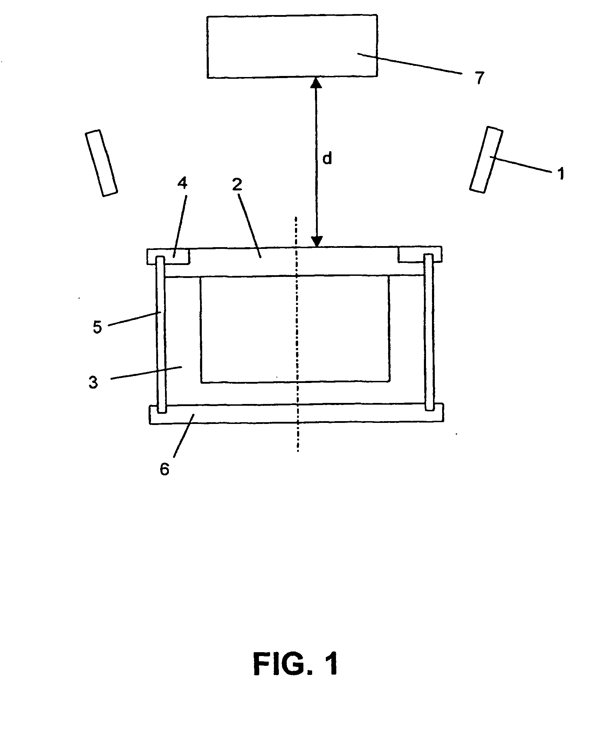

To carry out the process described in the present invention, the vacuum chamber must be provided with one or more cathode arc evaporators, as shown in figure 1, consisting of an anode (1) and a cathode or blank of the material to be evaporated (2), a base plate (6) and electrically insulating material protections (4 and 5), or any other equivalent design that will enable a material to be evaporated by means of a controlled electric arc discharge.

When put into the chamber, the tiles should be perfectly clean, with no traces of dust, grease or other contaminating products.

In the first stage of the process the ceramic tiles are preheated in a vacuum until reaching a temperature in the range of 150-500°C. and a pressure of 1x10-1 Pa, or lower. It is beneficial for the proper adhesion of the coating to preheat the pieces to higher temperatures, but this practice is detrimental to the productivity of the process. In order to shorten this first stage of the process as far as possible, it is best to preheat the pieces prior to putting them into the process chamber.

The second step of the process consists of the surface activation of the pieces to be coated. For this purpose an argon atmosphere is established at a pressure of less than 1 Pa, and the evaporator is set into operation, so that a direct current electric arc is set up between the anode (1) and the blank of the material to be evaporated (2), which acts as the cathode. The anode (1) is dispensed with in other types of arc evaporation sources and its role is performed by the vacuum chamber body. Such variations do not affect the purpose of the present invention. The activation stage must be carried out at a pressure below the maximum pressure Pmax defined by the expression:

$$Pmax = f_m - f_e\, d$$

where,

Pmax is expressed in Pa

$f_m$ is a factor that depends solely on the material being evaporated and its value is, for example, 2.5 Nm$^{-2}$ for titanium, 2.7 Nm$^{-2}$ for chromium, 3.6 Nm$^{-2}$ for tantalum and 3.0 Nm$^{-2}$ for zirconium.

$f_e$ is a characteristic factor of each evaporator, depending on its geometric characteristics and on the type of magnetic guiding with which the arc discharge is governed. As a rule, it usually varies in the range 6-10 Nm$^{-3}$

d is the distance between the surface of the pieces to be coated (7) and the surface of the cathode (2), expressed in metres.

The working pressure at the growth stage of the layer may vary within a relatively broad range, between 0.1 and 10 Pa, and the length of this stage is adjusted in accordance with the desired thickness of the coating.

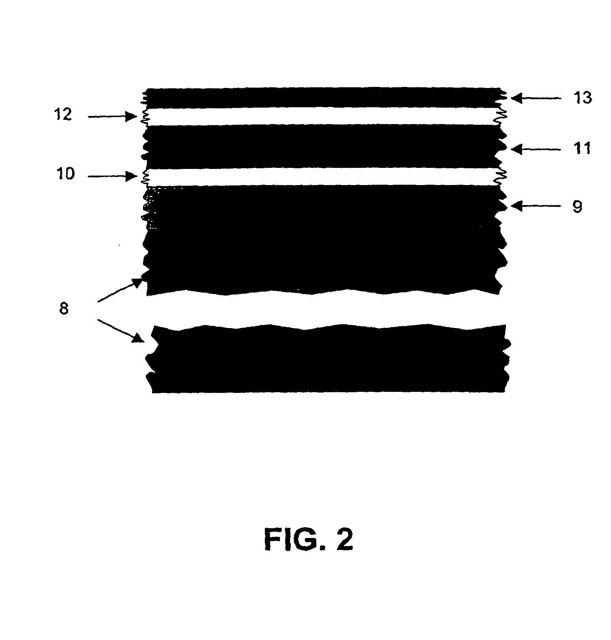

Figure 2 shows a diagrammatic representation of the product which is obtained with the invention process in question. The ceramic backing (8) coated with enamel (9) by means of the traditional procedure of simultaneous baking of a ceramic backing coated with a consolidated layer of frits and crystalline materials constitutes the substrate on which the vacuum coating is applied. As a result of the surface activation stage, a fine layer of evaporated metal is formed of a thickness of up to 200 nm (10). Then comes the protection layer proper, which may be composed of a pure metal, such as chromium, zirconium, tantalum or titanium, a metallic alloy, or a nitride or carbonitride of these metals (11). According to the requirements of the application and the nature of the material deposited, the thickness of this layer may vary from 100 to 10,000 nm.

When the coating applied is a pure metal (titanium, zirconium or chromium), if the pieces are left to cool down in the vacuum chamber until reaching ambient temperature, a metallic grey surface appearance is obtained. If, however, a mixture of nitrogen with up to 5% oxygen is allowed to enter the chamber when the pieces are still at a temperature in the range 200-500°C, a fine surface film of the coating (12)is oxidized. Due to the optical interference phenomena mentioned above, the surface appearance of the tile takes on red, blue or other shades of colouring impossible to obtain by other procedures. The range of tones that may be obtained by this method is very broad, as it depends on the reflection index of the oxide that has formed and on the depth of the oxidization film.

With the process described it is possible to apply a wide range of protective coatings. To illustrate the improvement that these coatings confer on the technical and decorative properties of the ceramic tiles, for purely illustrative and non-restrictive purposes, the present description contains a series of examples.

Furthermore, it is possible supplement this coating with a fine film of water-resistant material (13), applied either by conventional methods (immersion or centrifuging), or else by vacuum deposition of the thermally evaporated material or sputtering techniques.

A series of examples of different coatings applied by means of the process described in the invention, along with their most noteworthy technical properties, are listed below.

EXAMPLE 1

Zirconium nitride coating

Thickness: 0.3 microns
Colour: gold
Resistance to acid attack: GHA for hydrochloric, lactic and citric acids (according to ISO 10545, Part 13)
Resistance to attack with alkaline substances: GHA for potassium hydroxide, ammonium chloride and sodium hypochlorite (according to ISO 10545, Part 13)
Gloss(60): 736 ‰
Mean electrical resistance: 0.64 ($\Omega$/cm, for a potential difference =<6V (according to ASTM C483-66).

EXAMPLE 2

Chromium nitride coating

Thickness: 0.3 microns
Colour: metallic grey

Resistance to acid attack: GHA for hydrochloric, lactic and citric acids (according to ISO 10545, Part 13)
Resistance to attack with alkaline substances: GHA for potassium hydroxide, ammonium chloride and sodium hypochlorite (according to ISO 10545, Part 13)
Gloss(60): 300 ‰

EXAMPLE 3

Metal zirconium coating

Thickness: 0.3 microns
Colour: light metallic grey
Resistance to acid attack: GHA for hydrochloric, lactic and citric acids (according to ISO 10545, Part 13)
Resistance to attack with alkaline substances: GHA for potassium hydroxide, ammonium chloride and sodium hypochlorite (according to ISO 10545, Part 13)
Gloss(60): 422 ‰

EXAMPLE 4

Titanium nitride coating

Thickness: 0.3 microns
Colour: deep gold
Gloss(60): 534 ‰

EXAMPLE 5

Titanium coating

Thickness: 0.3 microns
Colour: metallic grey
Resistance to acid attack: GHA for hydrochloric acids (according to ISO 10545, Part 13)
Resistance to attack with alkaline substances: GHA for ammonium chloride and sodium hypochlorite (according to ISO 10545, Part 13)
Gloss(60): 300 ‰
Mean electrical resistance: 0.56 ($\Omega$/cm, for a potential difference =<6V (according to ASTM C483-66).

EXAMPLE 6

Titanium carbonitride coating

Thickness: 0.3 microns
Colour: metallic violet
Resistance to attack with alkaline substances: GHA for ammonium chloride and sodium hypochlorite (according to ISO 10545, Part 13)
Gloss(60): 319 ‰
Mean electrical resistance: 0.33 (Ω/cm, for a potential difference =<6V (according to ASTM C483-66).

**Claims**

1. Method for producing ceramic tiles having a metallic finish, by means of vacuum deposition techniques (PVD), **characterised in that** it comprises the deposition of a metallic layer (11), composed of an element selected from among the Cr, Zr, Ta or Ti group, or nitrides or carbonitrides of these elements, directly to the outer surface of the ceramic tile (8), which may be enamelled, the deposition is carried out in a vacuum chamber by means of at least one cathode arc evaporator comprising a cathode (7) of a material selected from among the Cr, Zr, Ta or Ti group, or nitrides or carbonitrides of these elements, said material is evaporated in particles that leave the cathode (7) without applying potential difference to the ceramic tile (8), the kinetic energy of the particles providing the surface activation of the ceramic tile (8).

2. Method for producing ceramic tiles having a metallic finish, according to claim 1, **characterised in that** it comprises the following operational stages:

   - Vacuum preheating of the ceramic tiles (8) until reaching a temperature between 150-500° and a pressure below 1x10$^{-1}$ Pa.
   - Surface activation of the ceramic tiles (8) at a maximum pressure defined by the following formula:

$$Pmax = f_m - f_e \, d,$$

   where
   $f_m$ is a factor that depends on the material to be evaporated, $f_e$ is a characteristic factor of the evaporator and d is the distance between the surface of the ceramic tile (8) to be coated and the surface of the cathode (7).

   - Growth of the metallyc layer (11) at a chamber pressure of 0.1 - 10 Pa, using an argon atmosphere to obtain layers of pure metals, a mixture of argon with nitrogen atmosphere to obtain layers of nitrides of metals, and mixtures of argon, nitrogen and a hydrocarbon atmosphere to obtain layers of carbonitrides of the metals.

3. Method for producing ceramic tiles having a metallic finish, according to claims 1 and 2, **characterised in that** after the layer growth stage and once the arc evaporators are switched off, the pieces are left to cool down in a vacuum, whereby the following coating colours are obtained:

   - Metallic grey of various shades for pure metals (Ti, Ta, Zr and Cr) and for chromium nitride.
   - Gold for zirconium and tantalum nitrides.
   - Deep gold for titanium nitride.
   - Metallic violet for titanium carbonitride.

4. Method for producing ceramic tiles having a metallic finish, according to claims 1 and 2, **characterised in that** after the termination of the layer growth stage and once the arc evaporators are switched off, a mixture of nitrogen with a maximum oxygen content of 5% is introduced into the chamber when the pieces are still at a temperature of 200 - 500° C, so that a fine surface film (12)is oxidized, which confers red, blue and other shades on the tiles as a result of optical interference.

5. Ceramic tile having a metallic finish, with porcelain stoneware backing, produced by the usual firing of products of this type and whose surface may be enamelled or glazed, **characterised in that** it is provided with an outer coating composed of a film of metal 100 - 10,000 nm thick, said metal being selected from chromium, zirconium, tantalum or titanium or else a nitride or carbonitride of one of these metals, presenting a gloss of more than 300‰, a surface hardness of more than 1500 kgf/mm$^2$, and having no visible surface defects when subjected to the attack of: hydrochloric acid solution 18% prepared from concentrated hydrochloric acid (d=1,19), lactic acid solution 5% (v/v) or potassium hydroxide 100 g/l.

6. Ceramic tile having a metallic finish according to claim 5 **characterised in that** the outer coating is composed of titanium nitride with a gloss of more than 500‰, a hardness of 1500 - 2500 kgf/mm$^2$, for a layer thickness of 2000 - 3000 nm and a mean electrical resistance of 0.56 Ω/cm (at a potential difference =< 6V, according to ASTM C443-66) for a 300 nm layer.

7. Ceramic tile having a metallic finish according to claim 5 **characterised in that** the outer coating is composed of zirconium nitride with a gloss of more than 700‰, a hardness of 2900 kgf/mm$^2$, for a layer thickness of 3000 - 4000 nm and a mean electrical resistance of 0.64 Ω/cm (at a potential difference =< 6V, according to ASTM C443-66) for a 300 nm layer.

**8.** Ceramic tile having a metallic finish according to claim 5 **characterised in that** the outer coating is composed of chromium nitride with a gloss of more than 300‰, a hardness of 1500 - 2500 kgf/mm$^2$, for a layer thickness of 2000 - 3000 nm.

**9.** Ceramic tile having a metallic finish according to claim 5 **characterised in that** the outer coating is composed of titanium carbonitride with a gloss of more than 300‰, a hardness of 3000 - 3500 kgf/mm$^2$, for a layer thickness of 3000 - 4000 nm and a mean electrical resistance of 0.33 $\Omega$/cm (at a potential difference =< 6V, according to ASTM C443-66).

**10.** Ceramic tile having metallic finish according to claim 5 **characterised in that** the outer coating is composed of titanium with a gloss of more than 300‰, a mean electrical resistance of 0.56 $\Omega$/cm (at a potential difference =< 6V, according to ASTM C443-66).

**11.** Ceramic tile having metallic finish according to claim 5 **characterised in that** the outer coating is composed of zirconium with a gloss of more than 400‰.

**12.** Ceramic tile having metallic finish according to claim 5 **characterised in that** it comprises a fine film of water-repellent material, applied to the outer coating by one of the methods selected from immersion, centrifuging or vacuum deposition by thermal action or sputtering.

**Patentansprüche**

**1.** Verfahren zur Herstellung von Keramikfliesen mit einem metallischen Finish, mittels Vakuumabscheidungstechniken (PVD), **dadurch gekennzeichnet, daß** es das Abscheiden einer metallischen Schicht (11) umfaßt, die aus einem Element besteht, das ausgewählt ist aus der Cr-, Zr-, Ta- oder Ti-Gruppe, oder Nitriden oder Carbonitriden dieser Elemente, direkt auf die äußere Oberfläche der Keramikfliese (8), die emailliert sein kann, daß die Abscheidung in einer Vakuumkammer mit Hilfe wenigstens eines Kathodenbogenverdampfers durchgeführt wird, der eine Kathode (7) aus einem Material umfaßt, das ausgewählt ist aus der Cr-, Zr-, Ta- oder Ti-Gruppe, oder Nitriden oder Carbonitriden dieser Elemente, daß besagtes Material in Teilchen verdampft wird, die die Kathode (7) verlassen, ohne Potentialdifferenz an die Keramikfliese (8) anzulegen, wobei die kinetische Energie der Teilchen die Oberflächenaktivierung der Keramikfliese (8) bereitstellt.

**2.** Verfahren zur Herstellung von Keramikfliesen mit einem metallischen Finish nach Anspruch 1, **dadurch gekennzeichnet, daß** es die folgenden Arbeitsschritte umfaßt:

- Vakuumvorheizen der Keramikfliesen (8), bis eine Temperatur zwischen 150 und 500°C und ein Druck unter 1 x 10$^{-1}$ Pa erreicht sind.

- Oberflächenaktivierung der Keramikfliesen (8) bei einem maximalen Druck, der durch die folgende Formel definiert ist:

$$Pmax = f_m - f_e\, d,$$

worin $f_m$ ein Faktor ist, der von dem zu verdampfenden Material abhängt, $f_e$ ein charakteristischer Faktor des Verdampfers ist und d der Abstand zwischen der Oberfläche der zu beschichtenden Keramikfliese (8) und der Oberfläche der Kathode (7) ist.

- Wachstum der metallischen Schicht (11) bei einem Kammerdruck von 0,1-10 Pa unter Verwendung einer Argonatmosphäre, um Schichten aus reinen Metallen zu erhalten, einer Mischung von Argon- mit Stickstoffatmosphäre, um Schichten aus Nitriden von Metallen zu erhalten, und Mischungen von Argon-, Stickstoff- und einer Kohlenwasserstoffatmosphäre, um Schichten aus Carbonitriden der Metalle zu erhalten.

**3.** Verfahren zur Herstellung von Keramikfliesen mit einem metallischen Finish nach den Ansprüchen 1 und 2, **dadurch gekennzeichnet, daß** nach dem Schichtwachstumschritt und nachdem die Bogenverdampfer abgeschaltet sind, die Stücke in einem Vakuum abkühlen gelassen werden, wodurch die folgenden Beschichtungsfarben erhalten werden:

- Metallisches Grau verschiedener Schattierungen für reine Metalle (Ti, Ta, Zr und Cr) und für Chromnitrid.

- Gold für Zirconium- und Tantalnitride.

- Dunkles Gold für Titannitrid.

- Metallisches Violett für Titancarbonitrid.

**4.** Verfahren zur Herstellung von Keramikfliesen mit einem metallischen Finish nach den Ansprüchen 1 und 2, **dadurch gekennzeichnet, daß** nach Beendigung des Schichtwachstumsschrittes und nachdem die Bogenverdampfer abgeschaltet sind, eine Mischung aus Stickstoff mit einem maximalen Sauerstoffgehalt von 5% in die Kammer eingebracht wird, wenn die Stücke noch bei einer Temperatur von 200-500°C sind, so daß ein feiner Oberflächenfilm (12) oxidiert wird, der als ein Ergebnis optischer Interferenz den Fliesen rote, blaue und andere Schattierungen verleiht.

5. Keramische Fliese mit einem metallischen Finish, mit einem Porzellansteinzeugrücken, die durch das übliche Brennen von Produkten dieses Typs hergestellt ist und deren Oberfläche emailliert oder glasiert sein kann, **dadurch gekennzeichnet, daß** sie mit einer äußeren Beschichtung bereitgestellt ist, die aus einem 100-10.000 nm dicken Metallfilm besteht, wobei besagtes Metall ausgewählt ist aus Chrom, Zirconium, Tantal oder Titan oder sonst einem Nitrid oder Carbonitrid eines dieser Metalle, die einen Glanz von mehr als 300 ‰, eine Oberflächenhärte von mehr als 1.500 kgf/mm$^2$ präsentiert und die keine sichtbaren Oberflächendefekte aufweist, wenn sie einem Angriff von Salzsäurelösung 18%, hergestellt aus konzentrierter Salzsäure (d = 1,19), Milchsäurelösung 5% (v/v) oder Kaliumhydroxid 100 g/l ausgesetzt wird.

6. Keramikfliese mit einem metallischen Finish nach Anspruch 5, **dadurch gekennzeichnet, daß** die äußere Beschichtung aus Titannitrid besteht, mit einem Glanz von mehr als 500 ‰, einer Härte von 1.500-2.500 kgf/mm$^2$, für eine Schichtdicke von 2.000-3.000 nm, und einem mittleren elektrischen Widerstand von 0,56 Ω/cm (bei einer Potentialdifferenz = <6V, gemäß ASTM C443-66) für eine 300 nm-Schicht.

7. Keramikfliese mit einem metallischen Finish nach Anspruch 5, **dadurch gekennzeichnet, daß** die äußere Beschichtung aus Zirconiumnitrid besteht, mit einem Glanz von mehr als 700 ‰, einer Härte von 2.900 kgf/mm$^2$, für eine Schichtdicke von 3.000-4.000 nm, und einem mittleren elektrischen Widerstand von 0,64 Ω/cm (bei einer Potentialdifferenz = <6V, gemäß ASTM C443-66) für eine 300 nm-Schicht.

8. Keramikfliese mit einem metallischen Finish nach Anspruch 5, **dadurch gekennzeichnet, daß** die äußere Beschichtung aus Chromnitrid besteht, mit einem Glanz von mehr als 300 ‰, einer Härte von 1.500-2.500 kgf/mm$^2$, für eine Schichtdicke von 2.000-3.000 nm

9. Keramikfliese mit einem metallischen Finish nach Anspruch 5, **dadurch gekennzeichnet, daß** die äußere Beschichtung aus Titancarbonitrid besteht, mit einem Glanz von mehr als 300 ‰, einer Härte von 3.000-3.500 kgf/mm$^2$, für eine Schichtdicke von 3.000-4.000 nm, und einem mittleren elektrischen Widerstand von 0,33 Ω/cm (bei einer Potentialdifferenz = <6V, gemäß ASTM C443-66).

10. Keramikfliese mit einem metallischen Finish nach Anspruch 5, **dadurch gekennzeichnet, daß** die äußere Beschichtung aus Titan besteht, mit einem Glanz von mehr als 300 ‰, einem mittleren elektrischen Widerstand von 0,56 Ω/cm (bei einer Potentialdifferenz = <6V, gemäß ASTM C443-66).

11. Keramikfliese mit einem metallischen Finish nach Anspruch 5, **dadurch gekennzeichnet, daß** die äußere Beschichtung aus Zirconium besteht, mit einem Glanz von mehr als 400 ‰.

12. Keramikfliese mit einem metallischen Finish nach Anspruch 5, **dadurch gekennzeichnet, daß** sie einen feinen Film aus wasserabstoßendem Material umfaßt, der auf die äußere Beschichtung mit einer der Methoden aufgebracht ist, die ausgewählt sind aus Tauchen, Zentrifugieren oder Vakuumabscheidung durch thermische Wirkung oder Sputtering.

**Revendications**

1. Procédé de production de dalles céramiques ayant une finition métallique, aux moyens de techniques de dépôt sous vide (PVD), **caractérisé en ce qu'**il comprend le dépôt d'une couche métallique (11), composée d'un élément choisi parmi le groupe Cr, Zr, Ta ou Ti, ou les nitrures ou carbonitrures de ces éléments, directement sur la surface extérieure de la dalle céramique (8), qui peut être émaillée, le dépôt étant réalisé dans une chambre sous vide au moyen d'au moins un évaporateur à arc de cathode comprenant une cathode (7) en une substance sélectionnée par le groupe Cr, Zr, Ta ou Ti, ou les nitrures et les carbonitrures de ces éléments, ladite substance étant évaporée dans des particules qui quittent la cathode (7) sans l'application d'une différence de potentiels à la dalle céramique (8), l'énergie cinétique de ces particules fournissant l'activation de surface de la dalle céramique (8).

2. Procédé de production de dalles céramiques ayant une finition métallique, selon la revendication 1, **caractérisé en ce qu'**il comporte les étapes fonctionnelles suivantes :

- préchauffage sous vide de la dalle céramique (8) jusqu'à l'obtention d'une température comprise entre 150 - 500° et une pression inférieure à 1x10$^{-1}$ Pa.

- activation de surface de dalle céramique (8) à une pression maximum définie par la formule suivante :

$$P_{max} = f_m - f_e \, d_1$$

Où

$f_m$ est un facteur qui dépend de la substance devant être évaporée, $f_e$ est un facteur caractéristique de l'évaporateur et d est la distance entre la surface de la dalle céramique (8) devant être revêtue et la surface de la cathode (7).

- croissance de la couche métallique (11) à une pression de chambre de 0,1x10 Pa, en utilisant une atmosphère d'argon pour obtenir des couches de métaux purs, un mélange d'argon avec une atmosphère d'azote pour obtenir des couches des nitrures des métaux, et des mélanges d'argon, d'azote et d'une atmosphère hydrocarbone pour obtenir des couches de carbonitrures des métaux.

3. Procédé de production de dalles céramiques ayant une finition métallique, selon les revendications 1 ou 2, **caractérisé en ce qu'**après l'étape de croissance de couche et une fois que les évaporateurs à arc ont été éteins, les pièces sont autorisées à se refroidir sous vide, permettant ainsi aux couleurs de revêtements suivantes d'être obtenues :

   - Gris métallique avec différents tons pour les métaux purs ( Ti, Ta, Zr et Cr) et pour le nitrure de chrome.
   - Or pour les nitrures de zirconium et tantale.
   - Or foncé pour le nitrure de titane.
   - Violet métallique pour le carbonitrure de titane.

4. Procédé de production de dalles céramiques ayant une finition métallique, selon les revendications 1 et 2, **caractérisé en ce qu'**après la fin de l'étape de croissance de couche et une fois que les évaporateurs à arc ont été éteints, un mélange d'azote avec une proportion d'oxygène maximale de 5 % est introduite dans la chambre quand les pièces sont toujours à une température de 200 - 500°C, de manière à ce qu'un film à surface fine (12) soit oxydé, ce qui confère des teintes rouges, bleues ou autres sur les tuiles à causes de l'interférence optique.

5. Dalle céramique ayant une finition métallique, avec un renforcement en grés céramе fin de porcelaine, produit par la cuisson usuelle de produits de ce type et dont la surface peut être émaillée ou vitrée, **caractérisée en ce qu'**elle est fournie avec un revêtement extérieur composé d'un film de métal de 100 à 10 000 nm d'épaisseur, ledit métal étant sélectionné parmi le chrome, zirconium, tantale ou sinon un nitrure ou carbonitrure de l'un de ces métaux, présentant une brillance supérieure à 300 ‰, une dureté de surface de plus de 1500 kgf/mm$^2$, et n'ayant aucun défaut surface visible quand il est soumis à l'attaque de : solution d'acide chlorhydrique à 18 % préparée à partir d'acide chlorhydrique concentré (d = 1,19), une solution d'acide lactique à 5% (v/v) ou d'hydroxyde de potassium 100 g/l.

6. Dalle céramique ayant une finition métallique selon la revendication 5, **caractérisée en ce que** le revêtement extérieur est composé de nitrure de titane avec une brillance de plus de 500 ‰, une dureté de 1500 - 2500 kgf/mm$^2$, pour une épaisseur de couche de 2000 - 3000 nm et une résistance électrique moyenne de 0,56 $\Omega$/cm (à une différence potentielle =< 6 V, selon ASTM C443-66) pour une couche de 300 nm.

7. Dalle céramique ayant une finition métallique selon la revendication 5, **caractérisée en ce que** le revêtement extérieur est composé de nitrure de zirconium avec une brillance de plus de 700 ‰, une dureté de 2900 kgf/mm$^2$, pour une épaisseur de couche de 3000 - 4000 nm et une résistance électrique moyenne de 0,64 $\Omega$/cm (à une différence de potentiels =< 6 V, selon ASTM C443-66) pour une couche de 300 nm.

8. Dalle céramique ayant une finition métallique selon la revendication 5, **caractérisée en ce que** le revêtement extérieur est composé de nitrure de chrome avec une brillance de plus de 300 ‰, une dureté de 1500 - 2500 kgf/mm$^2$, pour une épaisseur de couche de 2000 - 3000 nm.

9. Dalle céramique ayant une finition métallique selon la revendication 5, **caractérisée en ce que** le revêtement extérieur est composé de nitrure de titane avec une brillance de plus de 300 ‰, une dureté de 3000 - 3500 kgf/mm$^2$, pour une épaisseur de couche de 3000 - 4000 nm et une résistance électrique moyenne de 0,33 $\Omega$/cm (à une différence de potentiels =< 6 V, selon ASTM C443-66).

10. Dalle céramique ayant une finition métallique selon la revendication 5, **caractérisée en ce que** le revêtement extérieur est composé de titane avec une brillance de plus de 300 ‰, une résistance électrique moyenne de 0,56 $\Omega$/cm (à une différence de potentiels =< 6 V, selon ASTM C443-66).

11. Dalle céramique ayant une finition métallique selon la revendication 5, **caractérisée en ce que** le revêtement extérieur est composé de zirconium avec une brillance de plus de 400 ‰.

12. Dalle céramique ayant une finition métallique selon la revendication 5, **caractérisée en ce que** ce qu'elle comprend un film fin de matériaux hydrophobes, appliqué sur le revêtement extérieur par l'un des procédés sélectionnés parmi l'immersion, la centrifugation, le dépôt sous vide par action thermique ou pulvérisation cathodique.

FIG. 1

**FIG. 2**